# EUROPÄISCHE PATENTSCHRIFT

(11) **EP 1 712 097 B1**
(45) Veröffentlichungstag und Bekanntmachung des Hinweises auf die Patenterteilung: **19.05.2010**
(21) Anmeldenummer: 05701257.7
(22) Anmeldetag: 29.01.2005
(51) Int. Cl.: H04L 12/18

(54) **ÜBERTRAGUNG UND WIEDERGABE VON NACHRICHTEN IN MOBILFUNKNETZEN**
TRANSMISSION AND REPRODUCTION OF MESSAGES IN MOBILE RADIO NETWORKS
TRANSMISSION ET REPRODUCTION D'INFORMATIONS DANS DES RESEAUX RADIO MOBILES

(30) Priorität: 02.02.2004 DE 102004005188
(43) Veröffentlichungstag der Anmeldung: 18.10.2006
(73) Patentinhaber: Vodafone Holding GmbH, 40213 Düsseldorf (DE)
(72) Erfinder: MEHRVARZ, Timur, 40467 Düsseldorf (DE)
(74) Vertreter: Weisbrodt, Bernd
(86) Internationale Anmeldenummer: PCT/EP2005/000899
(87) Internationale Veröffentlichungsnummer: WO 2005/074306

(56) Entgegenhaltungen:
- EP-A- 1 215 864
- US-A1- 2003 125 055
- US-B1- 6 370 391
- US-B1- 6 400 958

## Beschreibung

Die vorliegende Erfindung betrifft ein Verfahren zur Übertragung und Wiedergabe von Nachrichten in Mobilfunknetzen, wobei Nachrichten mittels eines Nachrichtendienstes eines Mobilfunknetzes auf mobile Endgeräte übertragen und seitens der mobilen Endgeräte wiedergegeben werden. Ferner betrifft die vorliegende Erfindung ein mobiles Endgerät zur Nutzung in Mobilfunknetzen, welches zur Ausführung des Verfahrens ausgebildet ist.

Im Stand der Technik ist es bekannt reine Text-Nachrichten im ASCII-Format (American Standard Code for Information Interchange) mittels sogenanntem Cellbroadcasting - einem Nachrichtendienst eines Mobilfunknetzes - auf mobile Endgeräte zu übertragen und seitens dieser wiederzugeben. Dabei werden die Nachrichten in der Regel von einem Mobilfunknetzbetreiber und/oder einem entsprechenden Dienstleistungsanbieter an mehrere sich in einer Funkzelle des Mobilfunknetzes befindende Nutzer beziehungsweise deren mobile Endgeräte übertragen, beispielsweise Zellen- und/oder Gebietsinformationen oder dergleichen Nachrichten.

Die EP 1 215 864 A2 offenbart ein Verfahren zum Übertragen von Informationen in einem Rundspruch (Cellbroadcast) Dienst. Zur Verbesserung der Darstellbarkeit von mittels des Cellbroadcasting an ein mobiles Endgerät übertragener Nachrichten auf dem mobilen Endgerät wird das Betreiberlogofeld zur Darstellung der Nachrichten genutzt. Die Übertragung erfolgt mittels Smart-Messaging Mitteilungen.

Aus der US 2003/0125055 A1 ist ein Verfahren zum Übertragen von Nachrichten und zur Darstellung derselben unter Nutzung des Short Message Service (SMS) bekannt, wobei in der SMS Nachricht Formatinformationen übertragen werden, mit denen z.B. die Hintergrundfarbe oder das Format und die Farbe des darzustellenden Textes seitens des mobilen Endgeräts eingestellt werden.

Die US 6 400 958 B1 offenbart ein Endgerät, das eine Vielzahl von Anwendungen unterstützt. Übertragene Nachrichten weisen einen Datenkopf und weitere Daten auf, die vordefinierten Befehlen entsprechen und jeweils einer der Anwendungen eindeutig zugeordnet sind. Mittels einer entsprechende Befehle enthaltenen Nachricht lassen sich gänzlich neue Menüstrukturen im mobilen Endgerät erzeugen oder bestehende Menüstrukturen ergänzen.

Nachteilig ist die bisher beim Cellbroadcasting gegebene Beschränkung der Nachrichtendarstellbarkeit auf reine Text-Nachrichten im ASCII-Format. Ferner ist die Bandbreite von Cellbroadcasting relativ gering, da bisher mit beziehungsweise in einer Nachricht lediglich bis zu 93 Zeichen übertragbar sind. Dies führt mitunter dazu, dass entsprechende Dienste nicht oder nur selten genutzt werden.

Der Erfindung liegt in Anbetracht dieses Standes der Technik die **Aufgabe** zugrunde, ein Verfahren zur Übertragung und Wiedergabe von Nachrichten in Mobilfunknetzen, wobei Nachrichten mittels eines Nachrichtendienstes eines Mobilfunknetzes auf mobile Endgeräte übertragen und seitens der mobilen Endgeräte wiedergegeben werden, zu verbessern, insbesondere hinsichtlich der Nachrichtendarstellbarkeit derart, dass eine attraktivere und höhere Nutzung entsprechender Nachrichtendienste ermöglicht wird.

Zur technischen **Lösung** dieser Aufgabe wird erfindungsgemäß gemäß Anspruch 1 bzw. 21 vorgeschlagen, dass die Wiedergabe der Nachrichten seitens eines mobilen Endgerätes in einem Struktur- und Inhaltsinformationen enthaltenden Dokument eines Dokumentaustauschformats erfolgt.

Durch die erfindungsgemäße Wiedergabe von Nachrichten seitens eines mobilen Endgerätes in einem Struktur- und Inhaltsinformationen enthaltenden Dokument eines Dokumentaustauschformats werden die bisher in der Nachrichtendarstellbarkeit und der Bandbreite gegebenen Beschränkungen weitestgehend reduziert und damit die Übertragung und Wiedergabe von Nachrichten in Mobilfunknetzen verbessert, insbesondere da die Verwendung eines Struktur- und Inhaltsinformationen enthaltenden Dokuments eines Dokumentaustauschformats vorteilhafterweise eine über die Wiedergabe von reinen Text-Nachrichten hinausgehende Nachrichtenwiedergabe mittels eines Nachrichtendienstes eine Mobilfunknetzes ermöglicht.

Strukturinformationen eines Dokuments im Sinne der vorliegenden Erfindung sind jene Informationen, die die Unterteilung des Dokuments in Strukturbestandteile wie Art, Farbe, Größe und/oder Position und deren Eigenschaften für die Formatierung und Darstellung des Dokuments beschreiben. Bei Inhaltsinformationen eines Dokuments im Sinne der vorliegenden Erfindung handelt es sich um jene Informationen, die die eigentliche Nachricht ausmachen.
Ein Dokumentaustauschformat ist im Sinne der vorliegenden Erfindung die Repräsentation der Strukturinformationen und Inhaltsinformationen eines Dokuments zum Zwecke des Dokumentaustauschs, das heißt der Übermittlung von Dokumenten in einem Kommunikationsnetzwerk um Zwecke der Weiterbearbeitung oder Dokumentdarstellung.

Vorteilhafterweise werden die Inhaltsinformationen des Dokuments von wenigstens einer Nachricht gebildet. Erfindungsgemäß können so mehrere Nachrichten in einem Dokument wiedergegeben werden. In einer bevorzugten Ausgestaltung der Erfindung werden die Inhaltsinformationen des Dokuments von bis zu zehn Nachrichten gebildet. Gemäß einem weiteren vorteilhaften Vorschlag der Erfindung wird als Nachricht wenigstens ein Teil der Inhaltsinformationen des Dokuments übertragen.

In einer weiteren vorteilhaften Ausgestaltung der Erfindung sind die Strukturinformationen des Dokuments auf das mobile Endgerät übertragbar. Dadurch wird es ermöglicht, die Struktur des Dokuments vorzugeben und Nachrichten als Inhaltsinformationen in dem Dokument entsprechend strukturiert wiederzugeben. So können Nachrichten in einer vom jeweiligen Nutzer des mobilen Endgerätes, einem Mobilfunknetzbetreiber oder einem entsprechende Nachrichtendienste anbietenden Dienstleister vorgebbaren Struktur eines Dokuments wiedergegeben werden. Die durch die vorgebbare Struktur des Dokuments gegebene Aufmachung kann dabei von dem Nutzer zum Zwecke einer Individualisierung seines mobilen Endgerätes verwendet werden und/oder einem Mobilfunknetzbetreiber oder einem entsprechende Nachrichtendienste anbietenden Dienstleister nach Art einer Marke Herkunfts- und/oder Kundenbindungsfunktionen übernehmen. Vorteilhafterweise sind die Strukturinformationen des Dokuments von dem mobilen Endgerät speicherbar. Gemäß einem weiteren Vorschlag der Erfindung werden die Strukturinformationen des Dokuments mit einer Nachricht übertragen. Auf diese Art und Weise kann vorteilhafterweise insbesondere von einem Mobilfunknetzbetreiber und/oder einem entsprechenden Dienstleistungsanbieter eine bestimmte Struktur der in beziehungsweise mit dem Dokument wiedergebbaren Nachricht vorgegeben werden.

In einer weiteren vorteilhaften Ausgestaltung der Erfindung ermöglicht das Dokumentaustauschformat des Dokuments eine Wiedergabe von Nachrichten in graphischer und/oder farbiger Form. Dadurch wird die Nachrichtendarstellbarkeit erweitert und die Attraktivität einer Nutzung entsprechender Nachrichtendienste eines Mobilfunknetzes weiter gesteigert.

Gemäß einem vorteilhaften Vorschlag der Erfindung geben die Strukturinformationen die Wiedergabeform der Inhaltsinformationen vor, vorteilhafterweise hinsichtlich Art, Farbe Größe und/oder Position der Inhaltsinformationen.

In einer bevorzugten Ausgestaltung der Erfindung erstellen die Strukturinformationen ein seitens einer Anzeigeeinrichtung des mobilen Endgerätes wiedergebbares visuelles Fenster, innerhalb dessen als Inhaltsinformationen wenigstens zwei Nachrichten wiedergegeben werden.

In einer besonders bevorzugten Ausgestaltung der Erfindung zeigt wenigstens eine Nachricht eine Verknüpfung zu einer Nachrichtenquelle zur Auswahl an und erfolgt bei Auswahl der angezeigten Verknüpfung seitens des mobilen Endgerätes eine entsprechende Verknüpfung zu der Nachrichtenquelle. Die Nachrichtenquelle ist vorteilhafterweise eine entsprechende Nachrichten bereithaltende Datenbank in einem Kommunikationsnetzwerk. Die Verknüpfung ermöglicht vorteilhafterweise eine genormte Adressierung eines Angebots im Internet und ist in einer bevorzugten Ausgestaltung der Erfindung eine URL (Uniform Resource Locator).

In einer konkreten Ausgestaltung der Erfindung wird XHTML (eXtensible HyperText Markup Language) ein speziell für das Internet konzipiertes Dokumentaustauschformat auf der Grundlage von HTML (HyperText Markup Language) als Dokumentaustauschformat verwendet. Vorteilhafterweise ermöglicht es das Dokumentaustauschformat, wenigstens zwei Objekt-Typen, vorzugsweise XHTML (eXtensible HyperText Markup Language) und/oder SVG (Scalable Vector Graphics) und/oder GIF (Graphical Interchange Format) in einem Dokument zu übertragen und/oder wiederzugeben. In einer weiteren vorteilhaften Ausgestaltung der Erfindung wird das Dokument als MIME (Multipurpose Internet Mail Extension) übertragen und/oder wiedergegeben, so dass insbesondere mehrere Objekttypen, beispielsweise XHTML und GIF oder XHTML und SVG oder XHTML und GIF und SVG via multipart/mixed, als Dokument übertragbar und als Nachricht wiedergebbar sind.

Vorteilhafterweise ist der Nachrichtendienst des Mobilfunknetzes ein Rundspruchdienst, vorzugsweise ein nach Funkzellen individualisierbarer alphanumerischer Rundspruchdienst (Cellbroadcast).

Eine weitere Ausgestaltung der Erfindung betrifft ein mobiles Endgerät zur Nutzung in Mobilfunknetzen welches zur Ausführung eines erfindungsgemäßen Verfahrens ausgebildet ist. Vorteilhafterweise sind in diesem mobilen Endgerät die Strukturinformationen des Dokuments des Dokumentaustauschformats gespeichert, vorzugsweise werksseitig. Vorteilhafterweise ist das mobile Endgerät ein Mobilfunktelefon.

Weitere Einzelheiten, Merkmale und Vorteile der Erfindung werden nachfolgend anhand des in der Figur dargestellten Ausführungsbeispiels näher erläutert. Dabei zeigen:
- Fig. 1: in einer schematischen Prinzipdarstellung ein Ausführungsbeispiel eines erfindungsgemäßen Verfahrens zur Übertragung und Wiedergabe von Nachrichten in Mobilfunknetzen und
- Fig. 2: in einer schematischen Prinzipdarstellung ein Ausführungsbeispiel des Aufbaus einer Nachricht eines erfindungsgemäßen Verfahrens zur Übertragung und Wiedergabe von Nachrichten in Mobilfunknetzen.

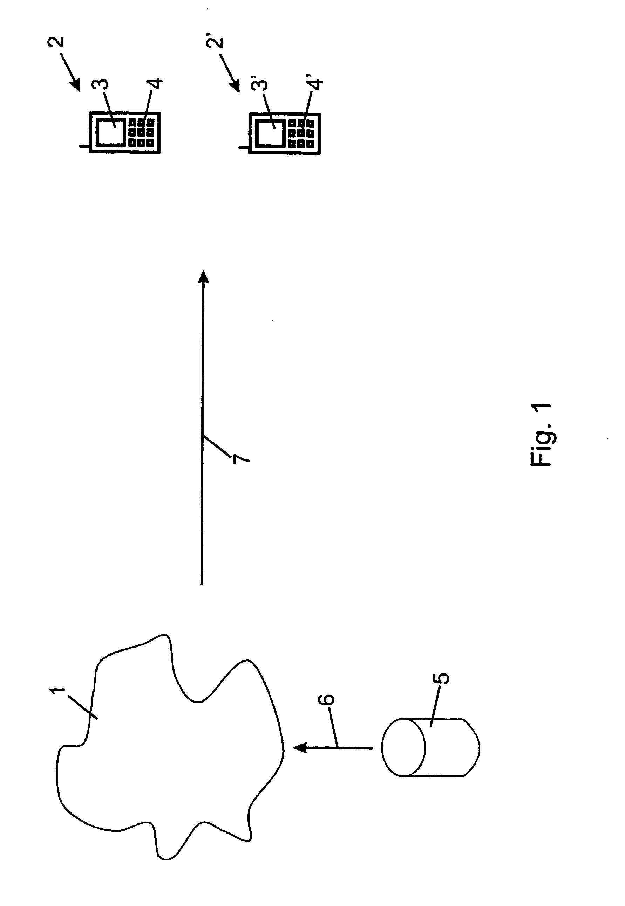

Fig. 1 zeigt die Übertragung von Nachrichten mittels eines Nachrichtendienstes 7, vorliegend Cellbroadcasting, eines Mobilfunknetzes 1 auf sich in wenigstens einer Funkzelle des Mobilfunknetzes 1 befindende mobile Endgeräte 2, 2', vorliegend Mobilfunktelefone. Die mobilen Endgeräte 2, 2' weisen jeweils ein als Ausgabeeinrichtung dienendes Display 3, 3', und eine als Eingabeeinrichtung dienende Tastatur 4, 4', auf. Das Mobilfunknetz 1 ist mit einer als Nachrichtenquelle dienenden Datenbank 5 verbunden. Die Verbindung zwischen Mobilfunknetz 1 und Nachrichtquelle 5 ist in Fig.1 durch den mit dem Bezugszeichen 6 gekennzeichneten Pfeil angedeutet.

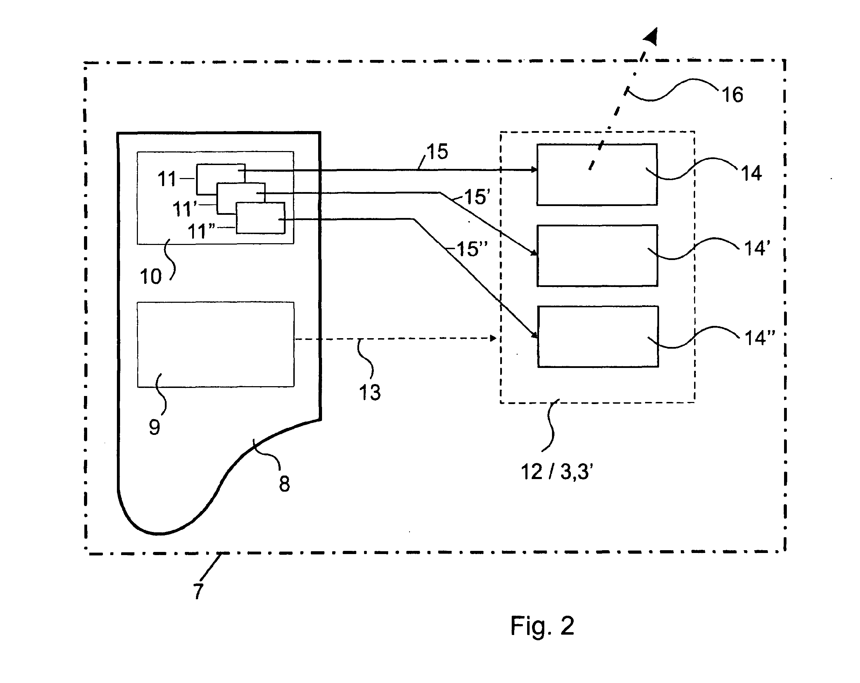

Wie in Fig. 2 dargestellt werden die mittels des Nachrichtendienstes 7 an die mobilen Endgeräte 2, 2' übertragenen Nachrichten 11, 11', 11" - welche seitens der Nachrichtenquelle 5 bereitgehalten sind - seitens der jeweiligen Ausgabeeinrichtung 3, 3', der mobilen Endgeräte 2, 2' in einem Strukturinformationen 9 und Inhaltsinformationen 10 enthaltenden Dokument 8 eines Dokumentaustauschformats, vorliegend XHTML, wiedergegeben.

Die Strukturinformationen 9 des Dokuments 8 erzeugen seitens der Anzeigeeinrichtung 3, 3' der mobilen Endgeräte 2, 2' ein visuelles Fenster 12, innerhalb dessen die Nachrichten 11, 11', 11" als Inhaltsinformationen 10 mittels unterschiedlicher Objekttypen 14, 14' und 14" - vorliegend XHTML, SVG und GIF - als Dokumenteninhalt dargestellt werden. Dabei wird vorliegend durch die Strukturinformationen 9 des Dokuments 8 die Wiedergabeform der Inhaltsinformationen 10 hinsichtlich Art, Farbe, Größe und/oder Position des Objekttyps 14, 14' und/oder 14" in dem visuellen Fenster 12 seitens der Anzeigeeinrichtung 3, 3' des mobilen Endgerätes 2, 2' vorgegeben. Die Inhaltsinformationen 10 des Dokuments 8 werden vorliegend von drei Nachrichten 11, 11' und 11" gebildet. Die Erzeugung des visuellen Fensters 12 seitens der Anzeigeeinrichtung 3, 3' der mobilen Endgeräte 2, 2' ist in Fig. 2 durch den mit dem Bezugszeichen 13 gekennzeichneten Pfeil symbolisch dargestellt. Die Erzeugung des Dokumenteninhalts mittels der unterschiedlichen Objekttypen XHTML 14, SVG 14' und GIG 14" seitens der Anzeigeeinrichtung 3, 3' der mobilen Endgeräte 2, 2' ist in Fig. 2 durch die mit den Bezugszeichen 15, 15' und 15" gekennzeichneten Pfeile symbolisch dargestellt. Die Übertragung auf und/oder die Wiedergabe des Dokuments 8 seitens des mobilen Endgerätes 2, 2' erfolgt vorliegend mittels MIME.

Vorliegend zeigt die mittels des Objekttyps XHTML 14 seitens in dem visuellen Fenster 12 seitens der Anzeigeeinrichtung 3, 3' der mobilen Endgeräte 2, 2' wiedergegebene Nachricht 11 eine Verknüpfung 16 zu der Nachrichtenquelle 5 zur Auswahl an. Bei Auswahl der angezeigten Verknüpfung seitens des mobilen Endgerätes 2, 2' durch Betätigung entsprechender Tasten seitens der Eingabeeinrichtung 4, 4' der mobilen Endgeräte 2, 2' durch den jeweiligen Nutzer der mobilen Endgeräte 2, 2', erfolgt eine entsprechende Verknüpfung 16 zu der Nachrichtenquelle 5. Die Nachrichtenquelle 5 ist dabei vorliegend über das Internet erreichbar. Die Verknüpfung 16 ist vorliegend eine URL der Nachrichtenquelle 5, welche eine direkte Verknüpfung der mobilen Endgeräte 2, 2' mit der Nachrichtenquelle 5 beziehungsweise entsprechend verknüpften, mitunter kostenpflichtigen Nachrichten seitens der Nachrichtenquelle 5 ermöglicht.

Die in den Figuren dargestellten Ausführungsbeispiele der Erfindung dienen lediglich der Erläuterung der Erfindung und sind für diese nicht beschränkend.

### Bezugszeichenliste

- 1: Mobilfunknetz
- 2, 2': mobiles Endgerät/Mobilfunktelefon
- 3, 3': Anzeigeeinrichtung/Display (mobiles Endgerät (2))
- 4, 4': Eingabeeinrichtung/Tastatur (mobiles Endgerät (2))
- 5: Nachrichtenquelle/Datenbank im Mobilfunknetz
- 6: Übertragung/Verknüpfung
- 7: Nachrichtendienst/Cellbroadcast (Mobilfunknetz (1))
- 8: Dokument
- 9: Strukturinformationen (Dokument (8))
- 10: Inhaltsinformationen (Dokument (8))
- 11, 11', 11": Nachricht
- 12: visuelles Fenster (Anzeigeeinrichtung (3, 3'))
- 13: Erzeugung visuelles Fenster (12)
- 14, 14', 14": Objekttypen Dokumenteninhalt
- 15, 15', 15": Erzeugung Dokumenteninhalt
- 16: Verknüpfung

## Patentansprüche

1. Verfahren zur Übertragung und Wiedergabe von Nachrichten (11, 11', 11") in Mobilfunknetzen (1), wobei Nachrichten (11, 11', 11") mittels eines seitens eines Mobilfunknetzes (1) bereitgestellten Rundspruchdlenstes (7) auf mobile Endgeräte (2, 2') übertragen und seitens der mobilen Endgeräte (2, 2') wiedergegeben werden,
**dadurch gekennzeichnet, dass**
die Wiedergabe der Nachrichten (11, 11', 11") seitens eines mobilen Endgerätes (2, 2') in einem Struktur- und Inhaltsinformationen (9, 10) enthaltenden Dokument (8) eines Dokumentaustauschformats erfolgt.

2. Verfahren nach Anspruch 1, **dadurch gekennzeichnet, dass** die Inhaltsinformationen (10) des Dokuments (8) von wenigstens einer Nachricht (11, 11', 11 ") gebildet werden.

3. Verfahren nach Anspruch 1 oder Anspruch 2, **dadurch gekennzeichnet, dass** die Inhaltsinformationen (10) des Dokuments (8) von bis zu zehn Nachrichten (11, 11', 11") gebildet werden.

4. Verfahren nach einem der Ansprüche 1 bis 3, **dadurch gekennzeichnet, dass** als Nachricht (11, 11', 11") wenigstens ein Teil der Inhaltsinformationen (10) des Dokuments (8) übertragen wird.

5. Verfahren nach einem der Ansprüche 1 bis 4, **dadurch gekennzeichnet, dass** die Strukturinformationen (9) des Dokuments (8) auf das mobile Endgerät (2, 2') übertragbar sind.

6. Verfahren nach Anspruch 5, **dadurch gekennzeichnet, dass** die Strukturinformationen des Dokuments mit einer Nachricht übertragen werden.

7. Verfahren nach einem der Ansprüche 1 bis 6, **dadurch gekennzeichnet, dass** die Strukturinformationen (9) des Dokuments (8) von dem mobilen Endgerät (2, 2') speicherbar sind.

8. Verfahren nach einem der Ansprüche 1 bis 7, **dadurch gekennzeichnet, dass** das Dokumentaustauschformat des Dokuments (8) eine Wiedergabe von Nachrichten (11, 11', 11") in graphischer Form ermöglicht.

9. Verfahren nach einem der Ansprüche 1 bis 8, **dadurch gekennzeichnet, dass** das Dokumentaustauschformat des Dokuments (8) eine Wiedergabe von Nachrichten (11, 11', 11") in farbiger Form ermöglicht.

10. Verfahren nach einem der Ansprüche 1 bis 9, **dadurch gekennzeichnet, dass** die Strukturinformationen (9) die Wiedergabeform der Inhaltsinformationen (10) vorgeben.

11. Verfahren nach Anspruch 10, **dadurch gekennzeichnet, dass** die Strukturinformationen (9) die Wiedergabeform der Inhaltsinformationen (10) hinsichtlich Art, Farbe, Größe und/oder Position vorgeben.

12. Verfahren nach einem der Ansprüche 1 bis 11, **dadurch gekennzeichnet, dass** die Strukturinformationen (9) ein seitens einer Anzeigeeinrichtung (3, 3') des mobilen Endgerätes (2, 2') wiedergebbares visuelles Fenster (12) erstellen, innerhalb dessen als Inhaltsinformationen (10) wenigstens zwei Nachrichten (11, 11') wiedergegeben werden.

13. Verfahren nach einem der Ansprüche 1 bis 12, **dadurch gekennzeichnet, dass** wenigstens eine Nachricht (11, 11', 11") eine Verknüpfung (16) zu einer Nachrichtenquelle (5) zur Auswahl anzeigt und bei Auswahl der angezeigten Verknüpfung (16) seitens des mobilen Endgerätes (2, 2') eine entsprechende Verknüpfung (16) erfolgt.

14. Verfahren nach Anspruch 13, **dadurch gekennzeichnet, dass** die Nachrichtenquelle (5) eine Datenbank in einem Kommunikationsnetzwerk ist.

15. Verfahren nach Anspruch 13 oder Anspruch 14, **dadurch gekennzeichnet, dass** die Verknüpfung (16) eine genormte Adressierung eines Angebots im Internet ermöglicht.

16. Verfahren nach Anspruch 15, **dadurch gekennzeichnet, dass** die Verknüpfung (16) eine URL ist.

17. Verfahren nach einem der Ansprüche 1 bis 16, **gekennzeichnet durch** XHTML als Dokumentaustauschformat.

18. Verfahren nach einem der Ansprüche 1 bis 17, **dadurch gekennzeichnet, dass** das Dokumentaustauschformat es ermöglicht, wenigstens zwei Objekt-Typen (14, 14', 14"), vorzugsweise XHTML und/oder SVG und/oder GIF in einem Dokument (8) zu übertragen und/oder wiederzugeben.

19. Verfahren nach Anspruch 18, **dadurch gekennzeichnet, dass** das Dokument (8) als MIME übertragen und/oder wiedergegeben wird.

20. Verfahren nach einem der Ansprüche 1 bis 19, **dadurch gekennzeichnet, dass** der Rundspruchdlenst (7) des Mobilfunknetzes (1) ein nach Funkzellen individualislerbarer alphanumerischer Rundspruchdienst, Cellbroadcast, ist.

21. Mobiles Endgerät (2, 2') zur Nutzung in Mobilfunknetzen, wobei dieses zur Ausführung eines Verfahrens nach einem der Ansprüche 1 bis 20 ausgebildet ist.

22. Mobiles Endgerät (2, 2') nach Anspruch 21, **dadurch gekennzeichnet, dass** in diesem die Strukturinformationen (9) des Dokuments (8) des Dokumentaustauschformats gespeichert sind, vorzugsweise werksseitig.

23. Mobiles Endgerät (2, 2') nach Anspruch 21 oder Anspruch 22, **dadurch gekennzeichnet, dass** dieses ein Mobilfunktelefon ist.

## Claims

1. A method for the transmission and reproduction of messages (11, 11', 11") in mobile networks (1), wherein messages (11, 11', 11") are transmitted to mobile terminals (2, 2') by means of a broadcast service (7) provided by a mobile network (1) and are reproduced by means of the mobile terminals (2, 2'),
**characterized in that**
the messages (11, 11', 11") are reproduced by means of a mobile terminal (2, 2') in a document (8) of a document exchange format containing structure and content information (9 and 10).

2. A method according to claim 1, **characterized in that** the content information (10) of the document (8) is formed by at least one message (11, 11', 11").

3. A method according to claim 1 or claim 2, **characterized in that** the content information (10) of the document (8) is formed by up to ten messages (11, 11', 11").

4. A method according to one of the claims 1 through 3, **characterized in that** at least a part of the content information (10) of the document (8) is transmitted as message (11, 11', 11").

5. A method according to one of the claims 1 through 4, **characterized in that** the structure information (9) of the document (8) can be transmitted to the mobile terminal (2, 2').

6. A method according to claim 5, **characterized in that** the structure information of the document will be transmitted with a message.

7. A method according to one of the claims 1 through 6, **characterized in that** the structure information (9) of the document (8) can be memorized by the mobile terminal (2, 2').

8. A method according to one of the claims 1 through 7, **characterized in that** the document exchange format of the document (8) enables a reproduction of messages (11, 11', 11 ") in graphic form.

9. A method according to one of the claims 1 through 8, **characterized in that** the document exchange format of the document (8) enables a reproduction of messages (11, 11', 11") in coloured form.

10. A method according to one of the claims 1 through 9, **characterized in that** the structure information (9) predefines the reproduction form of the content information (10).

11. A method according to claim 10, **characterized in that** the structure information (9) predefines the reproduction form of the content information (10) with respect to type, colour, size and/or position.

12. A method according to one of the claims 1 through 11, **characterized in that** the structure information (9) creates a visual window (12) which can be reproduced by means of a display device (3, 3') of the mobile terminal (2, 2') and within which at least two messages (11, 11') are reproduced as content information.

13. A method according to one of the claims 1 through 12, **characterized in that** at least one message (11, 11', 11") shows a link (16) to a message source (5) for selection and if the displayed link (16) is selected by means of the mobile terminal (2, 2'), a corresponding linkage (16) will be established.

14. A method according to claim 13, **characterized in that** the message source (5) is a data base in a communication network.

15. A method according to claim 13 or claim 14, **characterized in that** the linkage (16) enables a standardized addressing of an offer in the internet.

16. A method according to claim 15, **characterized in that** the linkage (16) is a URL.

17. A method according to one of the claims 1 through 16, **characterized by** XHTML as document exchange format.

18. A method according to one of the claims 1 through 17, **characterized in that** the document exchange format permits to transmit and/or to reproduce at least two object types (14, 14', 14"), preferably XHTML and/or SVG and/or GIF in a document (8).

19. A method according to claim 18, **characterized in that** the document (8) will be transmitted and/or reproduced as MIME.

20. A method according to one of the claims 1 through 19, **characterized in that** the broadcast service (7) of the mobile network (1) is an alphanumeric broadcast service that can be individualized according to radio cells, i.e. cell broadcast.

21. A mobile terminal (2, 2') for the use in mobile networks, wherein this one is adapted for carrying out the method according to one of the claims 1 through 20.

22. A mobile terminal (2, 2') according to claim 21, **characterized in that** the structure information (9) of the document (8) of the document exchange format is memorized in in this one, preferably by the manufacturer.

23. A mobile terminal (2, 2') according to claim 21 or claim 22, **characterized in that** this one is a mobile phone.

## Revendications

1. Procédé de transmission et de reproduction des messages (11, 11 11") dans des réseaux mobiles (1), dans lequel des messages (11, 11', 11") sont transmis à des terminaux mobiles (2, 2') par moyen d'un service de radiodiffusion (7) fourni par un réseau mobile (1) et sont reproduits par les terminaux mobiles (2, 2'),
**caractérisé en ce que**
les messages (11, 11', 11") sont reproduits par un terminal mobile (2, 2') dans un document (8) d'un format d'échange de documents contenant des informations de structure et de contenu (9, 10).

2. Procédé selon la revendication 1, **caractérisé en ce que** les informations de contenu (10) du document (8) sont formées par au moins un message (11, 11', 11 ").

3. Procédé selon la revendication 1 ou la revendication 2, **caractérisé en ce que** les informations de contenu (10) du document (8) sont formées par jusqu'à dix messages (11, 11', 11").

4. Procédé selon l'une des revendications 1 à 3, **caractérisé en ce qu'**au moins une part des informations de contenu (10) du document (8) est transmise en tant que message (11, 11', 11 ").

5. Procédé selon l'une des revendications 1 à 4, **caractérisé en ce que** les informations de structure (9) du document (8) sont transmissibles au terminal mobile (2, 2').

6. Procédé selon la revendication 5, **caractérisé en ce que** les informations de structure du document sont transmises avec un message.

7. Procédé selon l'une des revendications 1 à 6, **caractérisé en ce que** les informations de structure (9) du document (8) sont mémorisables par le terminal mobile (2, 2').

8. selon l'une des revendications 1 à 7, **caractérisé en ce que** le format d'échange de documents du document (8) permet une reproduction des messages (11, 11', 11") sous forme graphique.

9. Procédé selon l'une des revendications 1 à 8, **caractérisé en ce que** le format d'échange de documents du document (8) permet une reproduction des messages (11, 11', 11") en couleur.

10. Procédé selon l'une des revendications 1 à 9, **caractérisé en ce que** les informations de structure (9) prédéterminent la forme de reproduction des informations de contenu (10).

11. Procédé selon la revendication 10, **caractérisé en ce que** les informations de structure (9) prédéterminent la forme de reproduction des informations de contenu (10) par rapport au genre, à la couleur, à la taille et/ou à la position.

12. Procédé selon l'une des revendications 1 à 11, **caractérisé en ce que** les informations de structure (9) créent une fenêtre visuelle (12) et reproductible par moyen d'un dispositif d'affichage (3, 3') du terminal mobile (2, 2'), à l'intérieur duquel au moins deux messages (11, 11') sont reproduits en tant que informations de contenu (10).

13. Procédé selon l'une des revendications 1 à 12, **caractérisé en ce qu'**au moins un message (11, 11', 11") montre un lien (16) à une source de messages (5) pour la sélection et si le lien (16) affiché est sélectionné par moyen du terminal mobile (2, 2') un lien (16) correspond sera établi.

14. Procédé selon la revendication 13, **caractérisé en ce que** la source de messages (5) est une base de données dans un réseau de communication.

15. Procédé selon la revendication 13 ou la revendication 14, **caractérisé en ce que** le lien (16) permet un adressage standardisé d'un offre à l'internet.

16. Procédé selon la revendication 15, **caractérisé en ce que** le lien (16) est une URL.

17. Procédé selon l'une des revendications 1 à 16, **caractérisé par** XHTML en tant que format d'échange de documents.

18. Procédé selon l'une des revendications 1 à 17, **caractérisé en ce que** le format d'échange de documents permet de transmettre et/ou de reproduire au moins deux types d'objet (14, 14', 14"), de préférence XHTML et/ou SVG et/ou GIF dans un document (8).

19. Procédé selon la revendication 18, **caractérisé en ce que** le document (8) est transmis et/ou reproduit comme MIME.

20. Procédé selon l'une des revendications 1 à 19, **caractérisé en ce que** le service de radiodiffusion (7) du réseau mobile (1) est un service de radiodiffusion alphanumérique et individualisable selon des cellules de radio, i.e. la diffusion cellulaire.

21. Terminal mobile (2, 2') pour l'utilisation dans des réseaux mobiles, dans lequel celui-ci est adapté pour l'exécution d'un procédé selon l'une des revendications 1 à 20.

22. Terminal mobile (2, 2') selon la revendication 21, **caractérisé en ce que** les informations de structure (9) du document (8) du format d'échange de documents sont mémorisées dans celui-ci, de préférence par le fabricateur.

23. Terminal mobile (2, 2') selon la revendication 21 ou la revendication 22, **caractérisé en ce que** celui-ci est une téléphone mobile.
